## Europäisches Patentamt

## European Patent Office

## Office européen des brevets

(11) Veröffentlichungsnummer: **0 024 679**
**B1**

(12) **EUROPÄISCHE PATENTSCHRIFT**

(45) Veröffentlichungstag der Patentschrift:
**18.05.83**

(51) Int. Cl.³: **G 01 N 27/12**

(21) Anmeldenummer: **80104928.9**

(22) Anmeldetag: **19.08.80**

(54) Selektiver Gassensor hoher Empfindlichkeit und Stabilität zum Nachweis und zur Messung des Verunreinigungsgehaltes von Luft auf der Basis von Metalloxidhalbleitern.

(30) Priorität: **22.08.79 DE 2933971**

(43) Veröffentlichungstag der Anmeldung:
**11.03.81 Patentblatt 81/10**

(45) Bekanntmachung des Hinweises auf die Patenterteilung:
**18.05.83 Patentblatt 83/20**

(84) Benannte Vertragsstaaten:
**AT BE CH FR GB IT LI NL SE**

(56) Entgegenhaltungen:
**DE-A-2 254 977**
**DE-A-2 735 222**
**GB-A-1 500 320**
**GB-A-2 003 273**
**US-A-3 695 848**
**US-A-4 045 178**
**US-A-4 045 764**

(73) Patentinhaber: **SIEMENS AKTIENGESELLSCHAFT, Berlin und München Wittelsbacherplatz 2, D-8000 München 2 (DE)**

(72) Erfinder: **Treitinger, Ludwig, Dr., Kolbensteiner Strasse 25, D-8000 München 90 (DE)**

## Selektiver Gassensor hoher Empfindlichkeit und Stabilität zum Nachweis und zur Messung des Verunreinigungsgehaltes von Luft auf der Basis von Metalloxidhalbleitern

Die vorliegende Patentanmeldung betrifft einen selektiven Gassensor hoher Empfindlichkeit und Stabilität zum Nachweis und zur Messung von in der Luft enthaltenen Verunreinigungen, bestehend aus zwei Schichten aus Metalloxid-Halbleitermaterial, bei dem der von der Art und der Konzentration der Luftverunreinigung abhängende elektrische Widerstand der Metalloxid-Halbleiterschichten gemessen wird.

Ein selektiver Gassensor auf der Basis Metalloxid-Halbleiter ist aus der DE-A-2 735 222 bekannt. Bei diesem Gassensor wird eine aus Zinnoxid ($SnO_2$) bestehende Metalloxid-Halbleiterschicht verwendet, um z.B. den Äthylakoholgehalt in Luft zu bestimmen. Die Funktion eines solchen Gassensors beruht auf dem Prinizp, dass bei Adsorption eines spezifischen Gases aus der Luft eine Änderung der elektrischen Leitfähigkeit messbar ist. Die Empfindlichkeit des Gassensors ist durch die relative Änderung der elektrischen Leitfähigkeit pro Einheit Gaskonzentration in der Luft gegeben. Eine solche Messanordnung ist ebenfalls aus der DE-A-2 735 222 zu entnehmen.

Ein weiterer Gassensor auf der Basis Zinnoxid ($SnO_2$) mit Beimengungen von Niob, Vanadium, Titan und Molybdän ist aus dem J. Electrochem. Soc. *125*(1978) S. 1676-1679 zu entnehmen. Dieser Gassensor ist speziell für die Anzeige von Propan geeignet.

Desweiteren ist auch ein Gassensor auf der Basis von Zinkoxid (ZnO) mit Beimengungen von Platin bekannt, der deutlich höhere Empfindlichkeit gegenüber Butan und Propan als gegenüber Äthanol zeigt.

Aus der DE-A-2 911 072 ist ein selektiver Gassensor für Propan zu entnehmen, bei dem als Metalloxid-Halbleiter das System Indiumoxid mit 10% Kupferoxidanteil ($In_2O_3/CuO$) verwendet wird.

Aus der GB-A-2 003 273 ist ein aus drei Schichten unterschiedlicher Dicke bestehender Gassensor für Kohlenmonoxid bekannt. Dabei bestehen zwei der Schichten aus einem Metalloxid-Halbleitermaterial wie Zinnoxid und die andere, dünnere Schicht aus Platin.

Allen bekannten Gassensoren haftet der Nachteil an, dass sie eine zu geringe Selektivität und eine mangelhafte Langzeitstabilität besitzen, dass heisst, die Zeit für ihre erneute Einsatzbreitschaft ist zu lange. Die Mängel der Langzeitstabilität sind eine Veränderung (meist Absinken) des Grundleitwerts und eine Veränderung (immer Absinken) des Zusatzleitwerts. Diese Veränderungen haben ihre gemeinsame Ursache in der hohen Betriebstemperatur (zwischen etwa 200°C und 500°C), die Umwandlungen in der feinkristallinen Struktur des Halbleiters bewirkt. Diese Umwandlungen betreffen bei Dünnschicht-Anordnungen den ganzen Halbleiterkörper, bei Volumenanordnungen (Kugel oder Pille) hauptsächlich die Randzonen. Eine möglichst feinkörnige, im Idealfall amorphe Oberfläche des Sensors ist erwünscht, damit die aktive Oberfläche bzw. die Anzahl der Plätze, die für Adsorptionsvorgänge zur Verfügung stehen, möglichst gross ist. Der Betrieb bei höherer Temperatur bewirkt ein Wachsen der Körner, Verbreiterung der Randzonen und Abnahme der aktiven Oberfläche. Die Verbreiterung der hochohmigen Randzonen führt zum Absinken der Grundleitwerte, die Abnahme der aktiven Oberfläche zum Absinken des Zusatz-Leitwerts.

Die Aufgabe, die der Erfindung zugrundeliegt, besteht nun insbesondere darin, die Langzeitstabilität eines Gassensors auf Metall-Halbleiteroxid-Basis zu verbessern.

Diese Aufgabe wird durch einen Gassensor der eingangs genannten Art gelöst, der erfindungsgemäss dadurch gekennzeichnet ist, dass

a) die eine Schicht aus einer grob- bis einkristallinen Grundschicht besteht, deren Dicke der sich bei der Widerstandsmessung ausbildenden Raumladungszone angepasst ist und

b) die andere Schicht von einer über der Grundschicht angeordneten dünneren, amorphen Deckschicht gebildet ist, die aus einem, entsprechend der zu detektierenden Luftverunreinigung gewählten Metalloxid-Halbleiter-Material mit einem Leitwert, der aufgrund der sehr geringen Dicke dieser Deckschicht vernachlässigbar kleingegenüber dem Leitwert der Grundschicht ist, besteht.

Der Erfindung liegt die Idee zugrunde, für jede der beiden hauptsächlichen Funktionen, Erzeugung der zusätzlichen Ladungsträger und Weiterleitung dieser zusätzlichen Träger an die elektrischen Anschlüsse, eine separate Halbleiterschicht zu verwenden. Für die Weitergabe der Ladungsträger ist eine möglichst grobkristalline (im Idealfall einkristalline) stöchiometrische Halbleiterschicht vorgesehen, deren Dicke etwa die Debye-Länge, das heisst, etwa die Breite der Raumladungszone beträgt.

Einkristalline Schichten haben besonders zwei Vorteile: Die Beweglichkeit der Ladungsträger ist maximal, die Veränderung einer einkristallinen stöchiometrischen Schicht durch höhere Temperaturen ist minimal. Die hohe Beweglichkeit der Träger bringt für jede zusätzliche Trägerdichte n ein Maximum an zusätzlichem Leitwert $G = e \cdot n \cdot u \cdot K$, wobei e = Elementarladung, u = Beweglichkeit und K = Geometriefaktor, enthält Querschnitt und Länge der Halbleiterprobe.

Die perfekte Oberfläche einer einkristallinen Schicht bietet nur wenig Plätze für Adsorptionsvorgänge. Zur Erzeugung der zusätzlichen Träger wird deshalb eine sehr dünne amorphe Schicht auf die einkristalline Grundschicht aufgebracht. Diese amorphe Deckschicht muss so dünn sein, dass ihr Leitwert vernachlässigbar klein gegenüber dem der Grundschicht ist. Dadurch wird ein völlig konstanter Grundleitwert erzielt. Desweiteren werden damit alle zusätzlich erzeugten Träger mit der hohen Beweglichkeit der Grundschicht zu den Kontakten transportiert, also maximal für die Erzielung eines möglichst grossen Messsignals genützt. Ein Ladungstransport in der Deckschicht (parallel zu dem in der Grundschicht) würde zudem die Raumladungszone der Grundschicht von den elektrischen Wirkungen der Adsorptionsvorgänge abschirmen.

Es liegt im Rahmen des Erfindungsgedankens, dass die Grundschicht und die Deckschicht aus dem gleichen Metalloxid-Halbleitermaterial bestehen. Es ist aber auch möglich, dass verschiedene Materialien für beide Schichten verwendet werden. So können gemäss einem Ausführungsbeispiel nach der Lehre der Erfindung die Grundschicht und die Deckschicht aus Zinndioxid ($SnO_2$), Zinkoxid ($ZnO$), Wolframoxid ($WO_3$) oder Indiumoxid ($In_2O_3$), gegebenenfalls mit den entsprechenden Beimengungen oder Dotierungen wie Kupferoxid ($CuO$), Antimon ($Sb$), Zinn ($Sn$) und Edelmetallen bestehen, wobei die Grundschicht grob bis einkristallin und die Deckschicht amorph ist.

Wenn für die Grundschicht und die Deckschicht verschiedene Materialien verwendet werden, sollte für die Auswahl des Materials der Grundschicht ein oxidierter Halbleiter mit hoher Beweglichkeit verwendet werden, der möglichst einkristallin und störungsfrei auf das Substrat aufzubringen ist.

Für die Auswahl der Deckschicht ist neben dem schnellen Ladungstransfer zur Grundschicht auch die katalytische Eignung für die zu detektierende Luftverunreinigung Bedingung, die auch die Dicke der Deckschicht bestimmt.

Für die Stabilität der Deckschicht wird eine künstliche Alterung vorgenommen, wobei die Anordnung einer hochenergetischen, kurzzeitigen Laserbestrahlung kleiner Wellenlänge ausgesetzt wird. Die kurze Dauer, sowie die kleine Wellenlänge der Bestrahlung haben den Zweck, die Erwärmung auf die Deckschicht zu beschränken. Als Dauer für die Erwärmung sind einige Nanosekunden ausreichend, als Laserquelle werden vorzugsweise UV-Laser verwendet.

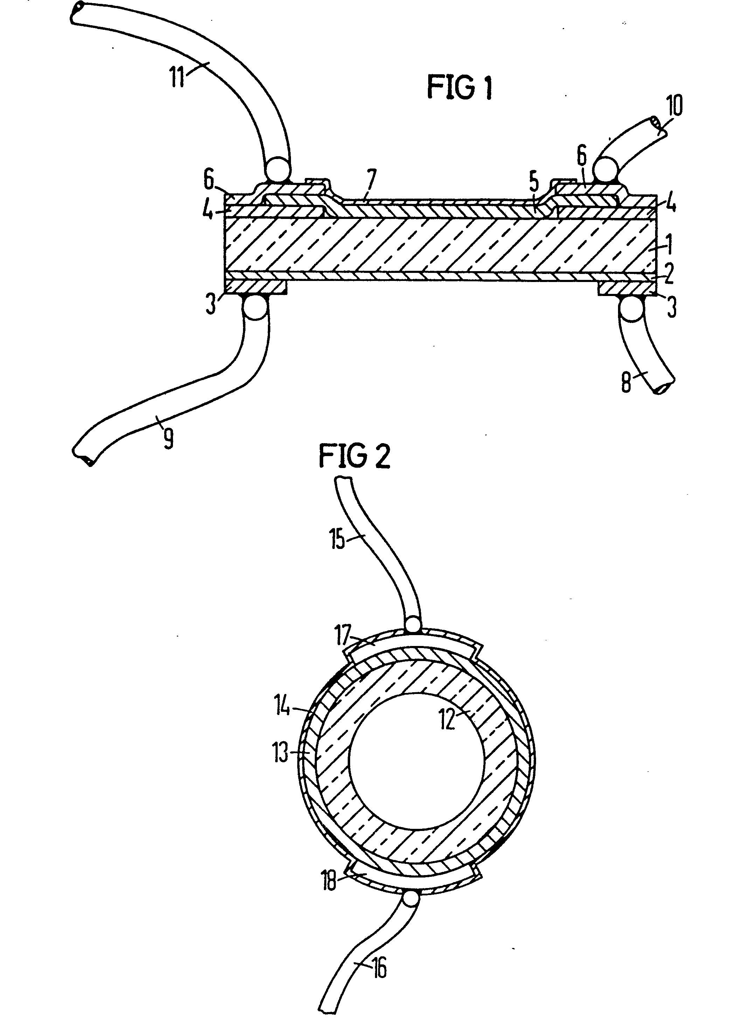

Weitere Einzelheiten sind den folgenden Ausführungsbeispielen sowie den Figuren 1 und 2 zu entnehmen. dabei zeigt die

Fig. 1 im Schnittbild eine Sensoranordnung in Planarform und die

Fig. 2 ein Ausführungsbeispiel in Zylinderform.

Fig. 1: Auf ein isolierendes, vorzugsweise einkristallines Substrat 1 aus oxidiertem Silizium, Saphir oder Spinell wird zunächst auf der einen Seite eine Heizschicht 2 aus einer Nickelchromlegierung oder Platin und darauf eine Kontaktschicht 3 aus Platin oder Gold/Palladium für die Heizschicht aufgedampft. Das Substrat 1 wird dann auf der anderen Seite entweder mit einer ersten Kontaktschicht 4 aus Platin oder Gold/Palladium für die Metalloxid-Halbleiterschicht versehen und dann darauf oder direkt auf dem Substrat 1 durch Sputtern oder ein CVD-Verfahren (chemical-vapor-deposition) die aus einkristallinem Zinndioxid ($SnO_2$) bestehende Grundschicht 5 in einer Schichtdicke von 50 nm aufgebracht. Dann wird die zweite Kontaktschicht 6 aus Platin oder Gold abgeschieden und darauf eine aus amorphem $SnO_2$ (als Sensor für Äthanol) oder aus amorphen Platinoxid ($PtO_2$) oder Palladiumoxid (als Sensor für Kohlenmonoxid oder Kohlenwasserstoffe) bestehende Deckschicht 7 in einer Schichtdicke kleiner 10 nm aufgebracht. die Anschlussdrähte 8 und 9 für die Heizschicht 2 und die Anschlussdrähte 10 und 11 des Sensors sind vorzugsweise 25 um bis 100 um dick und können aus Gold, Platin, Aluminium oder Nickel bestehen.

Fig. 2: Auf den als Substrat dienenden rohrförmigen Isolierkörper, z.B. einem Keramikrohr 12, werden die Grundschicht 13 und die Deckschicht 14 wie bei der Fig. 1 beschrieben, hergestellt. Die Deckschicht 14 entsteht nach dem letzten Verfahrensschritt nach dem Anbringen der Sensoranschlussdrähte 15 und 16 aus Gold, Platin, Aluminium oder Nickel durch Ultraschall- oder Widerstandsschweissung. Mit 17 und 18 sind die Kontakte für die Metalloxidhalbleiterschichten (13, 14) bezeichnet. Die Heizung besorgt eine Drahtwendel aus Chrom-Nickel-Draht von 25 um bis 150 um Dicke, die in das Keramikrohr eingezogen wird (in der Fig. 2 nicht dargestellt) und beliebig auswechselbar ist.

Nach dem Aufbringen der Deckschicht 14 (durch Sputtern, Sprühen, CVD) erfolgt ein kurzer Temperaturprozess mittels einer hochenergetischen Laserstrahlung (UV-Laser), wobei die Erwärmung auf die Deckschicht beschränkt bleibt.

Die Erfindung ist anwendbar auf alle Gassensorsysteme auf Metalloxid-Halbleiterbasis. Folgende Systeme von Metalloxid-Halbleiterschichten sind für spezielle Anwendungen als Alarmgeber für den erfindungsgemässen Gassensor einsetzbar:

$In_2O_3/CuO$ als Detektor für Propan,

$SnO_2$ mit Antimon als Detektor für Äthanol,

$SnO_2$ mit Nb, V, Ti, und Mo als Detektor für Propan,

ZnO mit Platin als Detektor für Butan und Propan,

$WO_3$ als Detektor für Äthanol und Aceton,

$PtO_2$ oder $PdO_2$ als Detektor für Kohlenmonoxid und Kohlenwasserstoffe.

**Patentansprüche**

1. Selektiver Gassensor hoher Empfindlichkeit und Stabilität zum Nachweis und zur Messung von in der Luft enthaltenen Verunreinigungen bestehend aus zwei Schichten aus Metalloxid-Halbleitermaterial, bei dem der von der Art und der Konzentration der Luftverunreinigung abhängende elektrische Widerstand der Metalloxid-Halbleiterschicht gemessen wird, dadurch gekennzeichnet, dass

a) die eine Schicht aus einer grob- bis einkristallinen Grundschicht (5, 13) besteht, deren Dicke der sich bei der Widerstandsmessung ausbildenden Raumladungszone angepasst ist und

b) die andere Schicht von einer über der Grundschicht (5, 13) angeordneten dünneren, amorphen Deckschicht (7, 14) gebildet ist, die aus einem, entsprechend der zu detektierenden Luftverunreinigung gewählten Metalloxid-Halbleiter-Material mit einem Leitwert, der aufgrund der sehr geringen Dicke dieser Deckschicht (7, 14) vernachlässigbar klein gegenüber dem Leitwert der Grundschicht (5, 13) ist, besteht.

2. Gassensor nach Anspruch 1, gekennzeichnet durch die Verwendung des gleichen Metalloxid-Halbleitermaterials für die Grund- (5, 13) und die Deckschicht (7, 14).

3. Gassensor nach Anspruch 1 und 2, gekennzeichnet durch eine Grundschicht (5, 13) aus grob- bis einkristallinem, gegebenenfalls mit entsprechenden Beimengungen u./od. Dotierungen versehenen Zinndioxid ($SnO_2$), Zinkoxid (ZnO), Wolframoxid ($WO_3$), oder Indiumoxid ($In_2O_3$) und einer amorphen Deckschicht (7, 14) aus dem jeweils gleichen Material.

0 024 679

4. Gassensor nach Anspruch 1, gekennzeichnet durch eine Grundschicht (5, 13) aus einkristallinem Zinndioxid, Zinkoxid, Wolframoxid oder Indiumoxid und einer amorphen Deckschicht (7, 14) aus Platinoxid ($PtO_2$) oder Palladiumoxid ($PdO_2$).

5. Gassensor nach Anspruch 3 oder 4, dadurch gekennzeichnet, dass als Beimengungen und/oder Dotierungen Kupferoxid (CuO), Antimon (Sb), Zinn (Sn), oder Edelmetalle verwendet sind.

6. Gassensor nach Anspruch 1 bis 5, dadurch gekennzeichnet, dass zur Erhöhung der Stabilität die Deckschicht (7, 14) thermisch gealtert ist.

7. Gassensor nach Anspruch 6, dadurch gekennzeichnet, dass die thermische Alterung durch eine kurzzeitige, hochenergetische Laserstrahlung kleiner Wellenlänge im Nanosekundenbereich bewirkt ist.

8. Gassensor nach Anspruch 1 bis 7, gekennzeichnet durch eine Schichtdicke der Grundschicht (5, 13) von 20 bis 100 nm und der Deckschicht (7, 14) von 1 bis 10 nm.

9. Gassensor nach Anspruch 1 bis 8, gekennzeichnet durch die Verwendung eines rohrförmigen Isolierkörpers (12) als Substrat für die Schichten.

10. Gassensor nach Anspruch bis 8, gekennzeichnet durch die Verwendung eines plattenförmigen, insbesondere einkristallinen Substrates (1).

**Revendications**

1. Détecteur de gaz sélectif à haute sensibilité et stabilité pour déceler et pour mesurer des impuretés contenues dans l'air, constitué de deux couches d'oxydes métalliques semiconducteurs, dans lequel est mesurée, la résistance électrique des couches d'oxydes métalliques semiconducteurs, qui dépend de la nature et de la concentration de l'impureté de l'air, caractérisé en ce que:
a) l'une des couches est constituée d'une couche de base (5, 13) en gros cristaux allant jusqu'au monocristal, dont l'épaisseur est adaptée à la zone de charge d'espace se formant lors de la mesure de la résistance, et
b) l'autre couche est formée d'une couche de revêtement (7, 14) mince, amorphe, disposée au-dessus de la couche de base (5, 13) et constituée d'un oxyde métallique semiconducteur choisi en correspondance avec l'impureté de l'air à déceler et ayant une conductance qui, en raison de l'épaisseur très faible de cette couche de revêtement (7, 14), est négligeable par rapport à la conductance de la couche de base (5, 13).

2. Détecteur de gaz suivant la revendication 1, caractérisé par l'utilisation du même oxyde métallique semiconducteur pour la couche de base (5, 13), et pour la couche de revêtement (7, 14).

3. Détecteur de gaz suivant la revendication 1 et 2, caractérisé par une couche de base (5, 13) en gros cristaux, allant jusqu'au monocristal, en bioxyde d'étain ($SnO_2$), en oxyde de zinc (ZnO), en oxyde de tungstène ($WO_3$), ou en oxyde d'indium ($In_2O_3$) additionné le cas échéant d'additifs et/ou d'agents de dopage appropriés et par une couche de revêtement (7, 14) amorphe en la même matière.

4. Détecteur de gaz suivant la revendication 1, caractérisé par une couche de base (5, 13) en bioxyde d'étain, oxyde de zinc, oxyde de tungstène ou oxyde d'indium monocristallin et par une couche de revêtement (7, 14) amorphe en oxyde de platine ($PtO_2$) ou en oxyde de palladium ($PdO_2$).

5. Détecteur de gaz suivant la revendication 3 ou 4, caractérisé en ce que comme additifs et/ou agents de dopage, de l'oxyde de cuivre (CuO), de l'antimoine (Sb), de l'étain (Sn), ou des métaux précieux sont utilisés.

6. Détecteur de gaz suivant les revendications 1 à 5, caractérisé en ce que, pour augmenter la stabilité, la couche de revêtement (7, 14) est vieillie thermiquement.

7. Détecteur de gaz suivant la revendication 6, caractérisé en ce que le vieillissement thermique est provoqué par un bref rayonnement laser de haute énergie et de petite longueur d'onde dans la plage des nanosecondes.

8. Détecteur de gaz suivant les revendications 1 à 7, caractérisé par une épaisseur de la couche de base (5, 13) de 20 à 100 nm et de la couche de revêtement (7, 14) de 1 à 10 nm.

9. Détecteur de gaz suivant les revendications 1 à 8, caractérisé par l'utilisation d'un corps isolant (12) tubulaire à titre de substrat pour les couches.

10 Détecteur de gaz suivant les revendications 1 à 8, caractérisé par l'utilisation d'un substrat (1), notamment monocristallin, en forme de plaquette.

**Claims**

1. A selective gas sensor of high sensitivity and stability for identifying and measuring impurities present in the air, comprising two layers of metal-oxide semiconductor material, in which the electrical resistance of the metal-oxide semiconductor layer, which is dependent upon the type and the concentration of the air pollution, is measured, characterised in that
a) one of said layers consists of a coarsely crystalline to monocrystalline basic layer (5, 13), the thickness is adapted to the space charge zone which is formed during the resistance measurement; and
b) the other of said layers is formed by a thinner amorphous covering layer (7, 14) made of a metal-oxide semiconductor material which is selected according to the air pollution to be detected and which has a conductance which, because of the very small thickness of this covering layer (7, 14), is negligibly small in comparison with the conductance of the basic layer (5, 13).

2. A gas sensor according to claim 1 and 2, characterised by the use of the same metal-oxide semiconductor material for the basic layer (5, 13) and for the covering layer (7, 14).

3. A gas sensor according to claim 1 and 2, characterised by a basic layer (5, 13) made of coarsely crystalline to monocrystalline tin oxide ($SnO_2$), zinc oxide (ZnO), tungsten oxide ($WO_3$), or indium oxide ($In_2O_3$), if necessary provided with appropriate additives and/or dopants, and an amorphous covering layer (7, 14) made of the same material in each case.

4. A gas sensor according to claim 1, characterised by a basic layer (5, 13) consisting of monocrystalline tin oxide, zinc oxide, tungsten oxide, or indium oxide, and an amorphous covering layer (7, 14) made of platinum oxide ($PtO_2$) or palladium oxide ($PdO_2$).

5. A gas sensor according to claim 3 or claim 4, characterised in that copper oxide (CuO), antimony (Sb), tin (Sn) or noble metals are used as additives and/or dopants.

6. A gas sensor according to claim 1 to 5, characterised in that, in order to increase its stability, the covering layer (7, 14) is thermally aged.

7. A gas sensor according to claim 6, characterised in that thermal aging is effected by a brief, high-energy laser radiation of small wavelength in the nanosecond range.

8. A gas sensor according to claims 1 to 7, characterised by a thickness of the basic layer (5, 13) of 20 to 100 nm and of the covering layer (7, 14) of 1 to 10 nm.

9. A gas sensor according to claims 1 to 8, characterised by the use of a tubular insulating body (12) as a substrate for the layers.

10. A gas sensor according to claims 1 to 8, characterised by the use of a plate-shaped, in particular a monocrystalline substrate (1).

# FIG 1

# FIG 2